# EUROPEAN PATENT SPECIFICATION

(11) **EP 1 566 978 B1**
(45) Date of publication and mention of the grant of the patent: **02.04.2008**
(21) Application number: 05101248.2
(22) Date of filing: 18.02.2005
(51) Int. Cl.: H04Q 7/28

(54) **Mobile communications systems, methods and terminals for handling group calls related informations**
Mobilkommunikationssysteme, Verfahren und Endgeräte zur Handhabung von Gruppenrufinformationen
Systèmes de communications mobiles, procédés et terminaux pour le traitement des informations des appels de groupe

(30) Priority: 19.02.2004 GB 0403689
(43) Date of publication of application: 24.08.2005
(73) Proprietor: MOTOROLA, INC., Schaumburg, IL 60196 (US)
(72) Inventor: Kramer, David, 67899, Tel Aviv (IL); Bar-on, David, 67899, Tel Aviv (IL)
(74) Representative: McCormack, Derek James

(56) References cited:
- EP-A- 1 253 770
- US-A- 5 511 232
- US-A- 5 758 291
- US-A1- 2003 083 086
- US-B1- 6 493 549

## Description

### FIELD OF THE INVENTION

The present invention relates to mobile communications systems, methods and terminals.

### BACKGROUND OF THE INVENTION

Mobile radio communications systems, for example cellular telephony or mobile radio communications systems, typically provide radio telecommunication links to be provided between a plurality of subscriber terminals, often referred to in the art as mobile stations (MSs) and in some cases between mobile stations and one or more fixed control terminals, as for example in the case of emergency services. The term 'mobile station (MS)' generally includes both hand-portable and vehicular mounted radio units, radiotelephones, and like wireless communications.

Mobile radio communications systems are distinguished from fixed communications systems, such as the public switched telephone networks (PSTN), principally in that mobile stations can move in geographical location to accompany their user and in doing so encounter varying radio propagation environments.

Mobile radio communications systems and mobile stations used in them may operate in one of two main modes, namely a TMO (trunked mode of operation) and a DMO (direct mode of operation). TMO communications use the system infrastructure supplied by the system operator. In some systems the infrastructure is known as the SwMI (Switching and Management Infrastructure). The infrastructure includes at least one base transceiver station (BTS), to deliver communications from one terminal, e.g. the MS of one user or operator, to that of one or more others terminals, e.g. the MS of one or more other users. In contrast, DMO is a method that provides the capability of direct communication between two or more MSs without any associated operator's system infrastructure. Some MSs may be dual mode operating using either TMO or DMO as appropriate.

In a TMO radio communications system, each BTS has associated with it a particular geographical coverage area (or cell). The cell defines a particular range over which the BTS can maintain acceptable communications with MSs operating within the cell. Often cells are combined to produce an expanded system coverage area. Furthermore, cells are often grouped into location areas for the purposes of tracking a MS within the coverage area whilst minimising location-updating signalling.

In the field of this invention, mobile communications systems are known which operate according to industry standard protocols. For example, systems operating according to the TETRA (TErrestrial Trunked Radio) standard protocol are known. The TETRA standard protocol is an operating protocol which has been defined for the telecommunications industry in Europe by the European Telecommunications Standards Institute (ETSI). The present invention is useful in (but not exclusively in) TETRA systems.

Cellular or trunked systems used for public safety services employ a use feature called a Talk Group (TG). This is a number of MSs that collectively form a group to communicate with one another on a particular matter or matters. A user of a MS that has joined a TG can articipate in a call that involves the members of that TG, but MSs that have not joined the TG may not participate.

In order for a MS to join the TG, it needs to have the details of the TG stored in its memory in a section of the memory known as its 'address book'. There may be a number of TGs in existence in a given region and any particular MS may be a member of several TGs. In several such systems it is usual for a person who is a system control authority, such as the operator of a central control console or 'dispatcher', to have the right to decide which MSs can participate in a particular TG and to provide the appropriate selected MSs with information about the TG which they need to have and to store in order to participate in the TG. Therefore, providing the enabling information about a particular TG to any particular MS is done by the control authority. The control authority (or someone acting on his/her behalf) may use a provisioning or programming tool by which the TG enabling information may be recorded directly in the MS. Alternatively, the enabling information may be sent to the relevant MS or MSs by or on behalf of control authority over the air by wireless communication using a special command signal. Such a command signal is recognised by the receiving MSs causing them to extract and store the enabling information from the command signal. In TETRA systems, this command signal is called the 'Dynamic Group Number Assignment' or DGNA. Using the DGNA, a control authority may add or delete TG details in the memory of any MS being used in the system. The DGNA signal in currently available systems does not provide any information about how the receiving MSs should store the TG enabling information, particularly where they are to store a list of numbers relating to a plurality of TGs.

US 2003/0083086 A1 describes a simple method for creating a dynamic talk group by a subscriber station of a group member sending to subscriber stations of other group members a group definition message for storage by the subscriber stations and one of the subscriber stations sending a message to the system to activate the group. This reference does not disclose formation of groups controlled by a control terminal and sending of group membership information and instructions by the control terminal as described herein.

US 6493549 describes a method of over the air updating of parameters stored by a memory of a mobile station. The method relates particularly to updating of parameters modified in accordance with the IS-683A model. The reference does not disclose sending of group membership information by a control terminal and instructions on how such information should be stored by mobile stations which are members of groups to which the information relates as described herein.

### SUMMARY OF THE PRESENT INVENTION

According to the present invention in a first aspect there is provided a wireless communication system including a system infrastructure, a plurality of mobile stations and a terminal operable to send to the mobile stations via the system infrastructure by wireless communication signals relating to information which the mobile stations are to store relating to communication in a group with other mobile stations, wherein the terminal is a control terminal operable to control membership of assigned groups of mobile stations in the system and to send to mobile stations group membership information relating to assigned communication groups of which the mobile stations are to be members and instruction signals giving an instruction to mobile stations relating to a priority order in which the group membership information is to be stored by the mobile stations in one or more lists of such information stored by the mobile stations and the mobile stations are operable to store the group membership information according to the instructed priority order.

The control terminal may comprise a terminal operated by a person having some control over the use of mobile stations (MSs) in the system. In particular, the person may have control over which mobile stations are permitted to be members of a particular assigned group of mobile stations, e.g. a particular Talk Group. The terminal may comprise a control console and its operator may be a so called dispatcher, i.e. a person who dispatches operational instructions to users of MSs in the system.

The control terminal may comprise a terminal which is hard wired to the system infrastructure, i.e. the fixed components of the system. Alternatively, the control terminal may comprise a mobile station, e.g. a personal computer plus RF modem, which feeds signals into the infrastructure by wireless communication, e.g. via one of the BTSs of the system infrastructure.

The information sent by the control terminal to selected MSs may therefore relate to assigned groups the MSs are permitted to join. The list or set of groups which each MS is a member of will in general differ from MS to MS. Thus, the sent information relates to where in a list of stored data in the mobile stations a particular piece or set of data should be stored. In other words, the information will include an instruction as to how the mobile stations should prioritise or group data in the relevant list or lists of data that they store. Although this new procedure will find beneficial use in the storage of group membership details in mobile stations, it may alternatively or in addition be used in an instructed manner for storage in mobile stations of data relating to anyone or more of the following: identities of other mobile stations, telephone numbers of other mobile stations or fixed telephones, e-mail addresses, short data messages and status messages.

Status messages are messages that may have an associated code and a message. When such messages are sent over the air to another party, e.g. to an operator, only the code needs to be sent. The receiving terminal can interpret the code and can display the message to its user. That saves over-the-air traffic. Examples of such messages which may be sent and displayed in this way include "out of the office", "available", etc. Since messages attached to the codes should be synchronized between the infrastructure and MS, if an operator wants to add a new status message, it may be forwarded to and downloaded by the MS.

Using the new procedure in the system and method according to the invention, a control authority may, by communication from the control terminal, e.g. via a control processor of the infrastructure, add or delete listed data such as TG details in the memory of any MS being used in the system and specify a selected order or grouping or listing position for the data added.

This will allow the controller (e.g. dispatcher) to define the position of data relating to each MS group established by or on behalf of the controller to be defined in a data listing in a memory of the MSs selected to be in the group. Thus, the controller can in this way prioritise the groups he/she establishes. The ability to do this can be important for example where each MS may on different occasions be used by different users, a common situation in use of MSs in public safety services. The benefit is that all MSs used in the system may be programmed in a similar manner regarding storage of data such as group membership data which is issued by or on behalf of the controller.

The data stored by the MSs, e.g. relating to group membership of the MS, may be arranged in a plurality of groups or sets (often referred to in the art as 'ranges'), and it is beneficial, if not important, to place such data in the appropriate group or set by use of the invention. In some cases the data may need to be placed in a certain place or sub-set within this group or set.

When a MS initiates a call to other members of its group, e.g. to members of a particular TG, e.g. by use of a particular control key or button, having the group details stored in a particular ordered grouping in the memory of the MS will facilitate retrieval of the details more easily internally within the MS, thus providing quicker call initiation.

The system according to the first aspect of the invention may be a TETRA or other trunked wireless communication system. Where the system is a TETRA system, the signal sent by the processor in the method according to the invention may be a DGNA command signal.

In TETRA systems, there are special signalling messages, sometimes referred to as 'PDUs', which are to be used for issue of DGNA messages. The processor in the system and method according to the invention may be incorporated in system infrastructure, e.g. the SwMI in a TETRA system. A control processor may be operable to send the instruction messages such as DGNA command signals on behalf of the control terminal to appropriate MSs by such signaling messages. Where the system and method are not in accordance with the TETRA standard protocol the data messages sent by the control processor may use other known data communication methods, e.g. using SDS (short data service) or Packet Data messaging.

The information relating to a new TG sent in a DGNA command signal in a TETRA system may include the TETRA Group identity number, known as the GSSI (Group Short Subscriber Identity) and its Alias, i.e. descriptive name. In use of the invention, there is also information about how the group is to be listed or grouped, e.g. based upon the priority of the group, specific index in the groups list in the memory of the selected member MSs. This additional information may comprise an extension to the DGNA data string (used in currently available systems) which has an indicator, e.g. number, recognized by the receiving MSs, indicating where in the listing or grouping of TG data by the memory of each MS the data is to be stored. For example, if the listed data is to be stored in sets or ranges having differing importance or priority levels, the indictor may indicate which set or range the DGNA data is to be stored in. Where one or more of the sets is split into sub-sets, the indicator may include two numbers defining which set and which sub-set the data is to be stored in.

The MSs of the system may use dummy data entries in their memory to occupy certain places in the data lists or groups for future use. For example, to assist a controller to plan the assignment of TGs, it may become important to keep some of the places in the MS data list(s) or groups available for future use, especially future use in which the need for a priority grouping assignment arises. In this case, certain dummy groups may be pre-defined, and may be put in pre-defined places in the data list or grouping (or sub-set of a particular group or set) in the memory of the MS. Then a signal sent for example by a system control processor on behalf of a control terminal, such as a DGNA command signal, can simply indicate to the selected MSs that a dummy data entry which exists may be replaced in the MS memory by a real data entry, e.g. a real TG identifier.

According to the present invention in a second aspect there is provided a mobile station operable as one of the mobile stations in the system according to the first aspect, including means for receiving from a terminal operable to send to the mobile stations via the system infrastructure by wireless communication signals relating to information the mobile stations are to store relating to communication in a group with other mobile stations, wherein the mobile station is operable to receive from a control terminal which controls membership of assigned groups of mobile stations in the system group membership information relating to communication groups of which the mobile station is to be member and instruction signals giving an instruction to the mobile station relating to a priority order in which the group membership information is to be stored by the mobile station in one or more lists of such information stored by the mobile station, and the mobile station is operable to store the group membership information in a memory according to the instructed priority order.

According to the present invention in a third aspect there is provided a method of operation in a wireless communication system including a system infrastructure, a plurality of mobile stations and a terminal which sends to the mobile stations via the system infrastructure by wireless communication signals relating to information the mobile stations are to store relating to communication in a group with other mobile stations, wherein the terminal is a control terminal which controls membership of assigned groups of mobile stations in the system and the control terminal sends to mobile stations (i) group membership information relating to communication groups of which the mobile stations are to be members and (ii) instruction signals giving an instruction to mobile stations relating to a priority order in which the group membership information is to be stored by the mobile stations in one or more lists of such information stored by the mobile stations, and the mobile stations store the group membership information according to the instructed priority order.

Embodiments of the present invention will now be described by way of example with reference to the accompanying drawings, in which:

### BRIEF DESCRIPTION OF THE ACCOMPANYING DRAWINGS

FIG. 1 is a block schematic diagram illustrating a mobile communication system.
FIG. 2 is a block schematic diagram of a mobile station used in the system shown in FIG. 1.

### DESCRIPTION OF EMBODIMENTS OF THE INVENTION

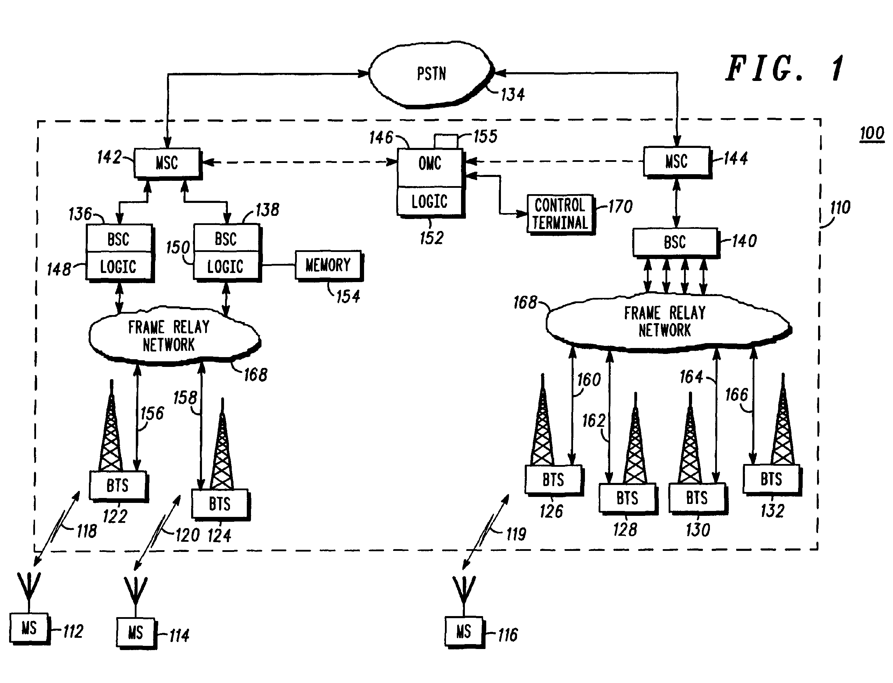

FIG. 1 shows, in outline, a trunked radio communications system 100 supporting a TETRA air-interface communication protocol in accordance with an embodiment of the invention.

A plurality of subscriber radio communication units, namely MSs 112-116, send and receive communications 118-120 over an air-interface to and from a plurality of serving base transceiver stations (BTSs) 122-132. In practice, each of the MSs 112-116 is served by a particular one of the BTSs 122-132 and each BTS 122-132 serves a number of MSs within a defined region or cell. Thus, each BTS 122-132 is principally designed to serve its primary cell, with each BTS 122-132 containing one or more transceivers.

Each of the BTSs 122-132 is connected via a frame relay network 168 to one of a plurality of base station controllers (BSCs) 142, 138 and 140. Also, each of the BTSs 122 - 132 may be connected to a conventional public switched telephone network (PSTN) 134 through the base station controllers (BSCs) 136-140 and through mobile switching centres (MSCs) 142-144 to which the BSCs are connected.

Each BSC 136-140 may control one or more BTSs 122-132, with BSCs 136-140 generally interconnected through the MSCs 142-144. The BSCs 136-140 are therefore able to communicate with one another, if desired, to pass system control and administration information between themselves, with BSCs responsible for establishing and maintaining control channel and traffic channels via the BTSs to serviceable MSs affiliated therewith. The interconnection of BSCs therefore allows the trunked radio communication system to support handover of the MSs between cells.

Each MSC 142-144 provides a gateway to the PSTN 134, with MSCs interconnected through an operations and management centre (OMC) 146 that administers general control of the trunked radio system 100, as will be understood by those skilled in the art. The various system components, such as BSCs 136-138 and OMC 146, will include control logic (processors) 148-152, with the various system components usually having an associated memory (shown only as memory 154 in relation to BSC 138 and memory 155 in relation to the OMC 146 for the sake of simplicity and clarity).

The memory 154 for example typically stores historically compiled operational data as well as in-call data, system information and control algorithms.

A control terminal 170 is coupled to the infrastructure of the system 100 to allow signals to be sent to and from the control terminal. (The infrastructure comprises the fixed components of the system 100 which are the components other than the MSs). As shown in FIG. 1, the coupling may comprise a hard wired connection to the OMC 146. However, signals to and from the control terminal 170 may alternatively be delivered into or by the infrastructure of the system 100 or by a wireless connection, e.g. via any of the BTSs of the system 100. Thus the control terminal may be a fixed or mobile terminal, e.g. a personal computer connected to the system 100 via a modem. The control terminal 170 is used by a person who is authorised to provide instructions to users of the MSs operating in the system 1. The system may be one used by an emergency or public safety service such as the police and the person operating the control terminal 22 may be a dispatcher who sends instructional messages to the users of MSs, e.g. police officers, via their MSs. Thus the control terminal 170 is in practice coupled to all of the MSs of the system 100 via the infrastructure of the system 100.

The operator of the control terminal 170 sends, amongst other things, via the control terminal 170 and system infrastructure messages giving instructions and information regarding the TGs of which the MSs of the system are or are not members. For example, when the operator of the control terminal 170 creates a new TG to deal with a particular operational situation, he/she is able to select the MSs which are to be members of the TG. He/she enters the relevant data into the terminal 170, e.g. by use of a data entry device such as a keyboard with the assistance of a display. The terminal 170 will understand the data entered and will forward it to a central control processor, e.g. within the OMC 146, for recordal in a memory, e.g. memory 155, for communication to the relevant MSs such as the MSs 112 and 114 via the BTSs 122 and 124. The terminal 170 may itself include a processor coupled to a display which is able to provide selection options for the operator. For example, when the operator enters a code to request creation of a new TG, the terminal 170 may prompt the operator to enter IDs of the current MS users that are to be members of the new TG. A memory of the infrastructure, e.g. memory 155, will have a record of the current user of each MS and can thereby provide the appropriate corresponding MS identity to the central control processor, e.g. of the OMC 146.

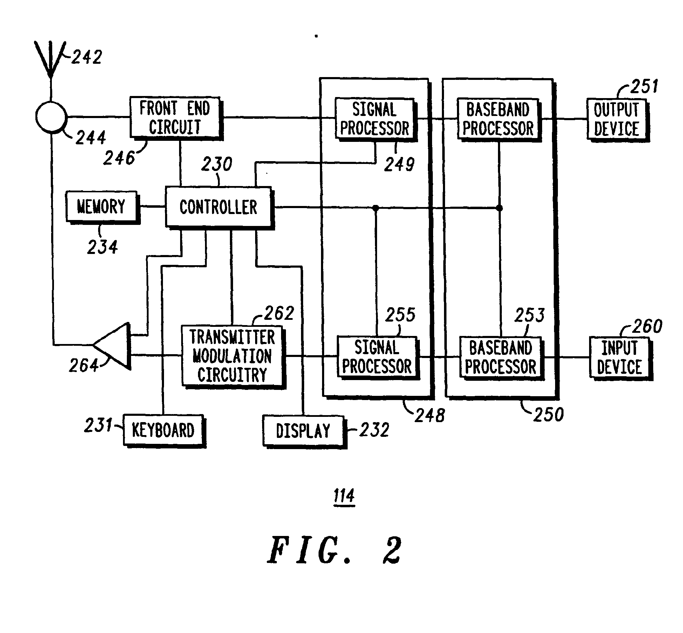

Thus, the operator of the control terminal 170 selects both the target MSs and groups to be added. The control terminal 170 may then send the system central control processor an appropriate special DGNA command signal giving this information. The central control processor sends messages about TG membership in one of the ways embodying the invention described earlier to the relevant MSs, e.g. the MS 112 and the MS 114. The relevant MSs, e.g. MS 112 and MS 114, understand, record and use the information in the messages in the manner described below with reference to FIG. 2.

The control terminal 170 waits for an acknowledgement signal from the control processor indicating that the relevant group information was sent to and was downloaded by the appropriate MS or MSs (or the command failed). There may be an option that if the system 100 did not find the target MS, either the control terminal 170 or the system control processor may periodically retry sending the command signal (e.g. every 5 minutes), until it is successfully received and downloaded.

The central control processor sends on behalf of the control terminal 170 messages about TG membership in one of the ways embodying the invention described earlier to the relevant MSs, e.g. the MS 112 and the MS 114. The relevant MSs, e.g. MS 112 and MS 114, understand, record and use the information in the messages in the manner described below with reference to FIG. 2.

Referring now to FIG. 2, a block diagram of the MS 114 adapted to operate using an embodiment of the present invention is shown. This is illustrative of the MSs used in the system 1 of FIG. 1. The MS 114 may be suitable for operating in a TMO or DMO depending on the mode selected. Operation of functions within the MS 114 are controlled by a controller 230, which generally comprises one or more suitably programmed digital signal processors. The controller 230 may also control the information flow and operational state of other processors within the MS 114.

Information relevant to operation of the MS 114 is stored in a memory 234 associated with the controller 230. For example, address information to be used in communications sent by the MS 219 is stored in the memory 234.

The MS 114 has a receiver chain and a transmitter chain and includes an antenna 242 coupled to a duplex filter or circulator 244 that provides isolation between receiver and transmitter chains within the MS 114. The receiver chain includes a receiver front end circuit 246 (effectively providing reception, filtering and intermediate or base-band frequency conversion of incoming communications). The front end circuit 246 receives radio communications from another terminal, such as another MS, e.g. the MS 112 (FIG. 1). The front end circuit 246 is serially coupled to a signal processor 247 (generally realised by a digital signal processor, DSP) coupled to the controller 230. The signal processor 247 performs signal demodulation, error correction and formatting, and recovers end-to-end encrypted information from the received signal.

A signal representing the information recovered by the signal processor 247 is serially coupled to a baseband processor 249, which takes the information received from the processor 247 and formats it in a suitable manner to send to an output device 251, such as a speaker.

The functions of the controller 230, the signal processor 247 and the baseband processor 249 although shown as separate in FIG. 2 may be implemented within the same physical microprocessor device.

The transmitter chain of the MS 114 essentially includes an input device 260, such as a microphone, coupled in series through a baseband processor 253, a signal processor 255, transmitter/modulation circuitry 262 and a power amplifier 264. The processor 255, transmitter/modulation circuitry 262 and the power amplifier 264 are operationally responsive to the controller 230. An output from the power amplifier 264 is supplied to the duplex filter or circulator 244, as known in the art. The transmitter chain in the MS 114 takes the baseband signal from input device 260 and delivers it to the signal processor 255 where it is encoded for transmission by the transmit/modulation circuitry 262 and is amplified by the power amplifier 264.

The signal processor 255 in the transmitter chain may be implemented in a device distinct from the processor 247 in the receiver chain. Alternatively, a single processor 248 may be used to implement processing of both transmit and receive signals, as shown in FIG. 2. Similarly, the baseband processor 249 and the baseband processor 253 may be separate devices or may be combined in a single device 250 as shown in FIG. 2.

Of course, the various components within the MS 114 can be realised in discrete or integrated component form, with an ultimate structure therefore being a suitable design selection from these forms.

The MS 114 also includes, coupled to the controller 230, a display 232 for displaying information to a user and a keyboard for entry of datal instructions by a user.

In use of the MS 114 when registered in the system 100 in a known manner, the MS 114 receives system control messages and instructions from the OMC 146 via the MSC 142 and, BSC 138 and BTS 124(FIG. 1). When the identity of a new TG is issued by the OMC 155 following a request from an operator of the control terminal 170, a signal containing information giving the identity together with a list of the MSs which are members of the TG is broadcast by the BTS 138 (and by the other BTSs in the system 100). The signal is received by the MS 114 and is decoded by the processors 247 and 249 and is delivered to the controller 230 where the information contained in the signal indicating the identity of the TG and the fact that the MS 114 is a member of the new TG is recognised.

The signal also gives an instruction on how the MS 114 should store the information. The received information is stored in the memory 234. The memory is arranged so that TG details stored in the memory 234 are grouped into sets or ranges, and in some cases sub-sets according to the priority and importance of the TG as defined by the operator of the control terminal 170. The received signal giving information on the new TG indicates to the MS 114 in which set (and if appropriate which subset) in the memory 234 the new TG data should be placed. The set and optionally the sub-set may be indicated by a number recognised by the controller 230 of the MS 114.

## Claims

1. A wireless communication system (100) including a system infrastructure (110), a plurality of mobile stations (112, 114, 116) and a terminal operable to send to the mobile stations via the system infrastructure by wireless communication signals relating to information the mobile stations are to store relating to communication in a group with other mobile stations, **characterised in that** the terminal is a control terminal (170) operable to control membership of assigned groups of mobile stations in the system and to send to mobile stations group membership information relating to communication groups of which the mobile stations are to be members and instruction signals giving an instruction to mobile stations relating to a priority order in which the group membership information is to be stored by the mobile stations in one or more lists of such information stored by the mobile stations and the mobile stations are operable to store the group membership information according to the instructed priority order.

2. A system according to claim 1 wherein the control terminal is a fixed or mobile terminal which is operable by a person having some control over the use of mobile stations (MSs) in the system.

3. A system according to claim 1 or claim 2 wherein each of the mobile stations includes a memory (234) operable to store group membership information in a plurality of groups or sets of data and the control terminal is operable to send instruction signals indicating to the mobile stations in which group or set particular group membership information is to be placed.

4. A system according to claim 3 wherein the memory is operable to store group membership information in one or more groups or sets of the data further sub-divided into sub-sets and the control terminal is operable to send instruction signals indicating to the mobile stations in which sub-set of a particular group or set particular data is to be placed.

5. A system according to any one of the preceding claims wherein the control terminal is operable to send to selected mobile stations group membership information relating to assigned groups the mobile stations are permitted to join.

6. A system according to claim 5 wherein the group membership information includes at least one of (i) identities of other mobile stations; (ii) telephone numbers of other mobile stations, (iii) status messages and (iv) short data messages; all relating to group communications with other mobile stations.

7. A system according to any one of the preceding claims wherein the system comprises a TETRA or other trunked wireless communication system.

8. A system according to claim 7 wherein the system is a TETRA system and the control terminal is operable to send an instruction signal which comprises a DGNA command signal.

9. A system according to claim 8 wherein the control terminal is operable send the DGNA command signal in the form of a special signalling message in which the group membership information is included in an extension to a DGNA data string.

10. A system according to any one of the preceding claims wherein the mobile stations of the system are operable to use dummy data entries in a memory storing group membership information to occupy for future use certain places in a list or group of entries group membership information and the control terminal is operable to send a signal to selected mobile stations that an existing dummy data entry is to be replaced by a real data entry relating to a talk group.

11. A mobile station (114) operable as one of the mobile stations in the system according to any one of the preceding claims, including means for receiving (246, 248, 250) from a terminal operable to send to the mobile stations via the system infrastructure by wireless communication signals relating to information which the mobile stations are to store relating to communication in a group with other mobile stations, **characterised in that** the mobile station (114) is operable to receive from a control terminal (170) which controls membership of assigned groups of mobile stations in the system group membership information relating to communication groups of which the mobile station is to be a member and instruction signals giving an instruction to the mobile station relating to a priority order in which the group membership information is to be stored by the mobile station in one or more lists of such information stored by the mobile station, and the mobile station is operable to store the group membership information in a memory (234) according to the instructed priority order.

12. A method of operation in a wireless communication system (100) including a system infrastructure (110), a plurality of mobile stations (112, 114, 116) and a terminal which sends to the mobile stations via the system infrastructure by wireless communication signals relating to information the mobile stations are to store relating to communication in a group with other mobile stations, **characterised in that** the terminal is a control terminal (170) which controls membership of assigned groups of mobile stations in the system and the control terminal sends to mobile stations:(i) group membership information relating to communication groups of which the mobile stations are to be members: and (ii) instruction signals giving an instruction to mobile stations relating to a priority order in which the group membership information is to be stored by the mobile stations in one or more lists of such information stored by the mobile stations, and the mobile stations store the group membership information according to the instructed priority order.

## Patentansprüche

1. Funkkommunikationssystem (100) mit einer Systeminfrastruktur (110), einer Vielzahl von Mobilstationen (112, 114, 116) und einem Endgerät, das so betreibbar ist, dass es den Mobilstationen über die Systeminfrastruktur durch drahtlose Kommunikation Signale sendet, die Information betreffen, die von den Mobilstationen gespeichert werden soll und Kommunikation in einer Gruppe mit anderen Mobilstationen betrifft, **dadurch gekennzeichnet, dass** das Endgerät ein Steuerendgerät (170) ist, das so betreibbar ist, dass es die Angehörigkeit von festgelegten Gruppen von Mobilstationen in dem System steuert und Mobilstationen Gruppenangehörigkeitsinformation und Anweisungssignale sendet, wobei die Gruppenangehörigkeitsinformation Kommunikationsgruppen betrifft, denen die Mobilstationen angehören sollen, und wobei die Anweisungssignale Mobilstationen eine Anweisung geben, die eine Prioritätsordnung betrifft, in der die Gruppenangehörigkeitsinformation von den Mobilstationen in einer oder in mehreren von den Mobilstationen gespeicherten Listen solcher Information gespeichert werden soll, und wobei die Mobilstationen so betreibbar sind, dass sie die Gruppenangehörigkeitsinformationen gemäß der angewiesenen Prioritätsordnung speichern.

2. System nach Anspruch 1, wobei das Steuerendgerät ein festes oder mobiles Endgerät ist, das von einer Person betreibbar ist, die ein gewisses Maß an Kontrolle über die Verwendung von Mobilstationen (MS) in dem System hat.

3. System nach Anspruch 1 oder Anspruch 2, wobei jede der Mobilstationen einen Speicher (234) aufweist, der so betreibbar ist, dass er Gruppenangehörigkeitsinformation in einer Vielzahl von Datengruppen oder -sätzen speichert, und wobei das Steuerendgerät so betreibbar ist, dass es Anweisungssignale sendet, die den Mobilstationen anzeigen, in welcher Gruppe oder in welchem Satz die jeweilige Gruppenangehörigkeitsinformation abgelegt werden soll.

4. System nach Anspruch 3, wobei der Speicher so betreibbar ist, dass er Gruppenangehörigkeitsinformation in einer oder in mehreren Gruppen oder Sätzen der weiter in Unter-Sätze unterteilten Daten speichert, und wobei das Steuerendgerät so betreibbar ist, dass es Anweisungssignale sendet, die den Mobilstationen anzeigen, in welchem UnterSatz einer bestimmten Gruppe oder eines bestimmten Satzes die jeweiligen Daten abgelegt werden sollen.

5. System nach einem der vorhergehenden Ansprüche, wobei das Steuerendgerät so betreibbar ist, dass es ausgewählten Mobilstationen Gruppenangehörigkeitsinformation sendet, die festgelegte Gruppen betrifft, denen die Mobilstationen beitreten dürfen.

6. System nach Anspruch 5, wobei die Gruppenangehörigkeitsinformation mindestens eines aus dem Folgenden enthält: (i) Identitäten anderer Mobilstationen; (ii) Telefonnummern anderer Mobilstationen, (iii) Statusnachrichten und (iv) kurze Datennachrichten; wobei alles Gruppenkommunikationen mit anderen Mobilstationen betrifft.

7. System nach einem der vorhergehenden Ansprüche, wobei das System ein TETRA-Bündelfunkkommunikationssystem oder ein anderes Bündelfunkkommunikationssystem umfasst.

8. System nach Anspruch 7, wobei das System ein TETRA-System ist und das Steuerendgerät so betreibbar ist, dass es ein Anweisungssignal sendet, das ein DGNA-Befehlssignal umfasst.

9. System nach Anspruch 8, wobei das Steuerendgerät so betreibbar ist, dass es das DGNA-Befehlssignal in Form einer speziellen Signalisierungsnachricht sendet, in der die Gruppenangehörigkeitsinformation in einer Erweiterung eines DGNA-Datenstrings enthalten ist.

10. System nach einem der vorhergehenden Ansprüche, wobei die Mobilstationen des Systems so betreibbar sind, dass sie Dummy-Dateneinträge in einem Speicher verwenden, der Gruppenangehörigkeitsinformation speichert, so dass er für zukünftige Verwendung gewisse Plätze in einer Liste oder Gruppe von Einträgen mit Gruppenangehörigkeitsinformation belegt, und wobei das Steuerendgerät so betreibbar ist, dass es ausgewählten Mobilstationen ein Signal sendet, dass ein existierender Dummy-Dateneintrag durch einen echten, eine Gesprächsgruppe betreffenden Dateneintrag ersetzt werden soll.

11. Mobilstation (114), die als eine der Mobilstationen in dem System nach einem der vorhergehenden Ansprüche betreibbar ist, mit Mitteln zum Empfangen (246, 248, 250) von einem Endgerät, das so betreibbar ist, dass es den Mobilstationen über die Systeminfrastruktur durch drahtlose Kommunikation Signale sendet, die Information betreffen, die von den Mobilstationen gespeichert werden soll und Kommunikation in einer Gruppe mit anderen Mobilstationen betrifft, **dadurch gekennzeichnet, dass** die Mobilstation (114) so betreibbar ist, dass sie von einem Steuerendgerät (170), das die Angehörigkeit von Mobilstationen in dem System zu festgelegten Gruppen steuert, Gruppenangehörigkeitsinformation und Anweisungssignale empfängt, wobei die Gruppenangehörigkeitsinformation Kommunikationsgruppen betrifft, denen die Mobilstation angehören soll, und wobei die Anweisungssignale der Mobilstation eine Anweisung geben, die eine Prioritätsordnung betrifft, in der die Gruppenangehörigkeitsinformation von der Mobilstation in einer oder mehrerer Listen solcher von der Mobilstation gespeicherter Information gespeichert werden soll, und wobei die Mobilstation so betreibbar ist, dass sie Gruppenangehörigkeitsinformation in einem Speicher (234) entsprechend der angewiesenen Prioritätsordnung speichert.

12. Verfahren zum Betrieb in einem Funkkommunikationssystem (100) mit einer Systeminfrastruktur (110), einer Vielzahl von Mobilstationen (112, 114, 116) und einem Endgerät, das den Mobilstationen über die Systeminfrastruktur durch Funkkommunikation Signale sendet, die Information betreffen, die von den Mobilstationen gespeichert werden soll und Kommunikation in einer Gruppe mit anderen Mobilstationen betrifft, **dadurch gekennzeichnet, dass** das Endgerät ein Steuerendgerät (170) ist, das die Angehörigkeit von Mobilstationen in dem System zu festgelegten Gruppen steuert, und das Steuerendgerät den Mobilstationen Folgendes sendet: (i) Gruppenangehörigkeitsinformation, die Kommunikationsgruppen betrifft, denen die Mobilstationen angehören sollen, und (ii) Anweisungssignale, die Mobilstationen eine Anweisung geben, die eine Prioritätsordnung betrifft, in der Gruppenangehörigkeitsinformation von den Mobilstationen in einer oder mehrer Listen solcher von den Mobilstationen gespeicherter Information gespeichert werden soll, und wobei die Mobilstationen die Gruppenangehörigkeitsinformation gemäß der angewiesenen Prioritätsordnung speichern.

## Revendications

1. Système de communication sans fil (100) comprenant une infrastructure de système (110), une pluralité de stations mobiles (112, 114, 116) et un terminal capable d'envoyer aux stations mobiles, via l'infrastructure de système, sans fil, des signaux de communication relatifs à des informations que les stations mobiles doivent stocker quant à une communication au sein d'un groupe avec d'autres stations mobiles, **caractérisé en ce que** le terminal est un terminal de commande (170) capable de contrôler l'adhésion de groupes attribués de stations mobiles du système et d'envoyer aux stations mobiles des informations d'adhésion de groupes relatives aux groupes de communication auxquels les stations mobiles doivent appartenir, et des signaux d'instructions fournissant une instruction aux stations mobiles, quant à un ordre de priorité dans lequel les informations d'adhésion de groupes doivent être stockées par les stations mobiles dans une ou plusieurs liste(s) d'informations stockées par les stations mobiles, et les stations mobiles sont capables de stocker les informations d'adhésion de groupes selon l'ordre de priorité demandé.

2. Système selon la revendication 1, dans lequel le terminal de commande est un terminal fixe ou mobile qui peut être actionné par une personne contrôlant l'utilisation des stations mobiles (MS) du système.

3. Système selon la revendication 1 ou la revendication 2, dans lequel chacune des stations mobiles comprend une mémoire (234) capable de stocker des informations d'adhésion de groupes dans une pluralité de groupes ou d'ensembles de données, et le terminal de commande est capable d'envoyer des signaux d'instructions indiquant aux stations mobiles le groupe ou l'ensemble dans lequel les informations d'adhésion de groupes doivent être placées.

4. Système selon la revendication 3, dans lequel la mémoire est capable de stocker des informations d'adhésion de groupes dans un ou plusieurs groupe(s) ou ensemble(s) de données à nouveau subdivisés en sous-ensembles, et le terminal de commande est capable d'envoyer des signaux d'instructions indiquant aux stations mobiles le sous-ensemble d'un groupe ou d'un ensemble particulier dans lequel les données particulières doivent être placées.

5. Système selon l'une quelconque des revendications précédentes, dans lequel le terminal de commande est capable d'envoyer aux stations mobiles sélectionnées des informations d'adhésion de groupes relatives aux groupes attribués auxquels les stations mobiles sont autorisées à se joindre.

6. Système selon la revendication 5, dans lequel les informations d'adhésion de groupes comprennent au moins l'un (i) d'identités d'autres stations mobiles ; (ii) de numéros de téléphone d'autres stations mobiles, (iii) de messages de statut et (iv) de messages de données courts, concernant tous des communications de groupe avec d'autres stations mobiles.

7. Système selon l'une quelconque des revendications précédentes, dans lequel le système comprend un TETRA ou tout autre système de communication sans fil à ressources partagées.

8. Système selon la revendication 7, dans lequel le système est un système TETRA et le terminal de commande est capable d'envoyer un signal d'instruction qui comprend un signal de commande DGNA.

9. Système selon la revendication 8, dans lequel le terminal de commande est capable d'envoyer le signal de commande DGNA sous la forme d'un message de signalisation spécial dans lequel les informations d'adhésion de groupes sont incluses dans une extension d'une chaîne de données DGNA.

10. Système selon l'une quelconque des revendications précédentes, dans lequel les stations mobiles du système sont capables d'utiliser des entrées de données factices dans une mémoire stockant des informations d'adhésion de groupes afin d'occuper, lors d'utilisations futures, certains emplacements au sein d'une liste ou d'un groupe d'entrées d'informations d'adhésion de groupes, et le terminal de commande est capable d'envoyer un signal aux stations mobiles sélectionnées, selon lequel une entrée de données factices existante doit être remplacée par une entrée de données réelles relative à un groupe de parole.

11. Station mobile (114) pouvant fonctionner comme l'une des stations mobiles dans le système selon l'une quelconque des revendications précédentes, comprenant un moyen de réception (246, 248, 250), de la part d'un terminal capable d'effectuer des envois aux stations mobiles, via l'infrastructure de système, sans fil, de signaux de communication relatifs à des informations que les stations mobiles doivent stocker quant à une communication au sein d'un groupe avec d'autres stations mobiles, **caractérisée en ce que** la station mobile (114) est capable de recevoir, de la part d'un terminal de commande (170) qui contrôle l'adhésion de groupes attribués de stations mobiles du système, des informations d'adhésion de groupes relatives aux groupes de communication auxquels la station mobile doit appartenir, et des signaux d'instructions fournissant une instruction à la station mobile, quant à un ordre de priorité dans lequel les informations d'adhésion de groupes doivent être stockées par la station mobile dans une ou plusieurs liste(s) d'informations stockées par la station mobile, et la station mobile est capable de stocker les informations d'adhésion de groupes dans une mémoire (234) selon l'ordre de priorité demandé.

12. Procédé de fonctionnement, dans un système de communication sans fil (100) comprenant une infrastructure de système (110), d'une pluralité de stations mobiles (112, 114, 116) et d'un terminal qui envoie aux stations mobiles, via l'infrastructure de système, sans fil, des signaux de communication relatifs aux informations que les stations mobiles doivent stocker quant à une communication au sein d'un groupe avec d'autres stations mobiles, **caractérisé en ce que** le terminal est un terminal de commande (170) qui contrôle l'adhésion de groupes attribués de stations mobiles du système, et le terminal de commande envoie aux stations mobiles : (i) des informations d'adhésion de groupes relatives aux groupes de communication auxquels les stations mobiles doivent appartenir ; et (ii) des signaux d'instructions fournissant une instruction aux stations mobiles quant à un ordre de priorité dans lequel les informations d'adhésion de groupes doivent être stockées par les stations mobiles dans une ou plusieurs liste(s) d'informations stockées par les stations mobiles, et les stations mobiles stockent les informations d'adhésion de groupes selon l'ordre de priorité demandé.
